# EUROPEAN PATENT APPLICATION

(11) **EP 4 403 723 A1**
(43) Date of publication of application: **24.07.2024**
(21) Application number: 23171535.0
(22) Date of filing: 04.05.2023
(51) Int. Cl.: E04H 4/16, G05D 1/02

(54) **WATER SURFACE PROFILE CLEANING METHOD AND SYSTEM OF ROBOT SWIMMING POOL CLEANER, AND READABLE STORAGE MEDIUM**

(30) Priority: 17.01.2023 CN 202310055766
(71) Applicant: Shenzhen Aiper Intelligent Co., Ltd, Shenzhen (CN)
(72) Inventor: Wang, Yang, Shenzhen (CN); Yu, Xueliang, Shenzhen (CN); Ye, Liangwen, Shenzhen (CN)
(74) Representative: Zaboliene, Reda

(57) **Abstract**

Disclosed in the present application are a water surface profile cleaning method and system of a robot swimming pool cleaner, and a readable storage medium. The method includes: acquiring sensing information of a first water surface sensor and sensing information of a second water surface sensor; obtaining driving wheel power information according to the sensing information of the first water surface sensor and the sensing information of the second water surface sensor; obtaining cleaning route information of a robot swimming pool cleaner according to the driving wheel power information and preset angle information; and cleaning, by the robot swimming pool cleaner, a water surface profile according to a cleaning route. In the present application, a moving track problem and an up and down movement cleaning problem of a robot swimming pool cleaner at a water surface profile can be systematically solved, such that the water surface profile of a swimming pool can be cleaned completely without leaving a dead corner.

## Description

### Technical Field

The present application relates to the technical field of swimming pool cleaning, and more specifically, to a wall waterline cleaning method and system of a robot swimming pool cleaner, and a readable storage medium.

### Background

A swimming pool is a venue for people to engage in swimming sports, and some garbage or bacteria may be bred during usage, especially at a wall water surface profile formed at a contact part between the water surface of the swimming pool and the wall of the swimming pool. Due to long-time contact with dirt floating on the water surface, there is a large amount of water surface dirt attached to the waterline of the wall, so that cleaning is required regularly. However, cleaning the dirt at the waterline can be very labor intensive. There is not yet a robot swimming pool cleaner on the market that can effectively and automatically clean a water surface profile.

Therefore, the related art is defective and needs to be improved.

### Summary

In view of the above problem, the present application is intended to provide a water surface profile cleaning method and system of a robot swimming pool cleaner, and a readable storage medium, so as to clean a water surface profile of a swimming pool more effectively and more conveniently.

A first aspect of the present application provides a water surface profile cleaning method of a robot swimming pool cleaner. The method includes the following operations.

Sensing information of a first water surface sensor and sensing information of a second water surface sensor are acquired.

Driving wheel power information is obtained according to the sensing information of the first water surface sensor and the sensing information of the second water surface sensor.

Cleaning route information of a robot swimming pool cleaner is obtained according to the driving wheel power information and preset angle information.

The robot swimming pool cleaner cleans a water surface profile according to a cleaning route.

In the present solution, the operation of cleaning, by the robot swimming pool cleaner, the water surface profile according to the cleaning route includes the following operations.

Water-draining motor starting information is sent to a preset water-draining motor, so as to make the robot swimming pool cleaner tightly attached to a wall.

Cleaning roller brush starting information is sent to a preset control terminal, so as to start a cleaning roller brush to clean the water surface profile.

Dirt suction port starting information is sent to the preset control terminal, so as to start a dirt suction port to store dirt that is cleaned off.

In the present solution, the method further includes the following operations.

Angle information of a preset gyroscope is acquired.

Pose angle information of the robot swimming pool cleaner is obtained according to the angle information of the preset gyroscope.

Whether a pose angle of the robot swimming pool cleaner is within a preset angle range is determined; if no, angle adjustment is performed by means of a preset attitude controller; and if so, adjustment does not need to be performed.

In the present solution, the method further includes the following operations.

Reacting force information of a wall to robot swimming pool cleaner wheels is acquired.

Whether a reacting force of the wall to the robot swimming pool cleaner wheels is within a preset reacting force range is determined; if no, preset water-draining motor power is adjusted; and if so, adjustment does not need to be performed.

In the present solution, the method further includes the following operations.

Height information of the water surface profile is acquired.

Whether the height of the water surface profile is greater than or equal to a preset height threshold is determined; if no, an unable-to-work prompt is triggered; and if so, a prompt is not triggered.

In the present solution, the method further includes the following operations.

Detection information of a preset water flow detector is acquired.

Information on the flow rate of sewage treated by a dirt suction port per unit time is obtained according to the detection information of the preset water flow detector.

Whether the information on the flow rate of sewage treated by the dirt suction port per unit time is less than a preset flow threshold is determined; if so, cleaning filter screen information is triggered; and if no, the cleaning filter screen information is not triggered.

A second aspect of the present application provides a water surface profile cleaning system of a robot swimming pool cleaner. The system includes a memory and a processor. The memory stores a water surface profile cleaning method program of a robot swimming pool cleaner; and the water surface profile cleaning method program of a robot swimming pool cleaner implements, when being executed by the processor, the following steps.

A first aspect of the present application provides a water surface profile cleaning method of a robot swimming pool cleaner. The method includes the following operations.

Sensing information of a first water surface sensor and sensing information of a second water surface sensor are acquired.

Driving wheel power information is obtained according to the sensing information of the first water surface sensor and the sensing information of the second water surface sensor.

Cleaning route information of a robot swimming pool cleaner is obtained according to the driving wheel power information and preset angle information.

The robot swimming pool cleaner cleans a water surface profile according to a cleaning route.

In the present solution, the operation of cleaning, by the robot swimming pool cleaner, the water surface profile according to the cleaning route includes the following operations.

Water-draining motor starting information is sent to a preset water-draining motor, so as to make the robot swimming pool cleaner tightly attached to a wall.

Cleaning roller brush starting information is sent to a preset control terminal, so as to start a cleaning roller brush to clean the water surface profile.

Dirt suction port starting information is sent to the preset control terminal, so as to start a dirt suction port to store dirt that is cleaned off.

In the present solution, the system further includes executing the following operations. Angle information of a preset gyroscope is acquired.

Pose angle information of the robot swimming pool cleaner is obtained according to the angle information of the preset gyroscope.

Whether a pose angle of the robot swimming pool cleaner is within a preset angle range is determined; if no, angle adjustment is performed by means of a preset attitude controller; and if so, adjustment does not need to be performed.

In the present solution, the system further includes executing the following operations. Reacting force information of a wall to robot swimming pool cleaner wheels is acquired.

Whether a reacting force of the wall to the robot swimming pool cleaner wheels is within a preset reacting force range is determined; if no, preset water-draining motor power is adjusted; and if so, adjustment does not need to be performed.

In the present solution, the system further includes executing the following operations.

Height information of the water surface profile is acquired.

Whether the height of the water surface profile is greater than or equal to a preset height threshold is determined; if no, an unable-to-work prompt is triggered; and if so, a prompt is not triggered.

In the present solution, the system further includes executing the following operations.

Detection information of a preset water flow detector is acquired.

Information on the flow rate of sewage treated by a dirt suction port per unit time is obtained according to the detection information of the preset water flow detector.

Whether the information on the flow rate of sewage treated by the dirt suction port per unit time is less than a preset flow threshold is determined; if so, cleaning filter screen information is triggered; and if no, the cleaning filter screen information is not triggered.

A third aspect of the present application provides a computer-readable storage medium. The computer-readable storage medium has a water surface profile cleaning method program of a robot swimming pool cleaner stored thereon. The water surface profile cleaning method program of a robot swimming pool cleaner implements, when being executed by a processor, steps of the water surface profile cleaning method of a robot swimming pool cleaner as described in any one of the above.

According to the water surface profile cleaning method and system of a robot swimming pool cleaner, and the readable storage medium, the method includes: acquiring the sensing information of the first water surface sensor and the sensing information of the second water surface sensor; obtaining the driving wheel power information according to the sensing information of the first water surface sensor and the sensing information of the second water surface sensor; obtaining the cleaning route information of the robot swimming pool cleaner according to the driving wheel power information and the preset angle information; and cleaning, by the robot swimming pool cleaner, the water surface profile according to the cleaning route. In the present application, a moving track problem and an up and down movement cleaning problem of a robot swimming pool cleaner at a water surface profile can be systematically solved, such that the water surface profile of a swimming pool can be cleaned completely without leaving a dead corner.

### Brief Description of the Drawings

Fig. 1 is a flowchart of a water surface profile cleaning method of a robot swimming pool cleaner according to the present application.
Fig. 2 is a schematic diagram of a cleaning principle of a robot swimming pool cleaner according to the present application.
Fig. 3 is a schematic diagram of a water surface cleaning route of a robot swimming pool cleaner according to the present application.
Fig. 4 is a schematic diagram of a movement mode of a robot swimming pool cleaner for water surface cleaning according to the present application.
Fig. 5 is a schematic diagram of a moving-against-wall principle of a robot swimming pool cleaner according to the present application.
Fig. 6 is a block diagram of a water surface profile cleaning system of a robot swimming pool cleaner according to the present application.

In the drawings:
1. First water surface sensor; 2. Second water surface sensor; 3. Attitude controller; 4. Flow channel; 6. Dirt suction port; 7. Cleaning roller brush; 8. Controllable driving wheel forward power and attitude adjustment power; 10. Water-draining motor; 11. Robot center of gravity position line; 12. Swimming pool wall water surface profile.

### Detailed Description of the Embodiments

In order to enable a clearer understanding of the above objectives, features and advantages of the present application, the present application is further described in detail below with reference to the accompanying drawings and specific implementations. It is to be noted that the embodiments in the present application and the features in the embodiments may be combined with one another without conflict.

While many specific details are set forth in the following description to facilitate a full understanding of the present application, the present application may also be implemented in other manners different from those described herein, and therefore the scope of protection of the present application is not limited by the specific embodiments disclosed below.

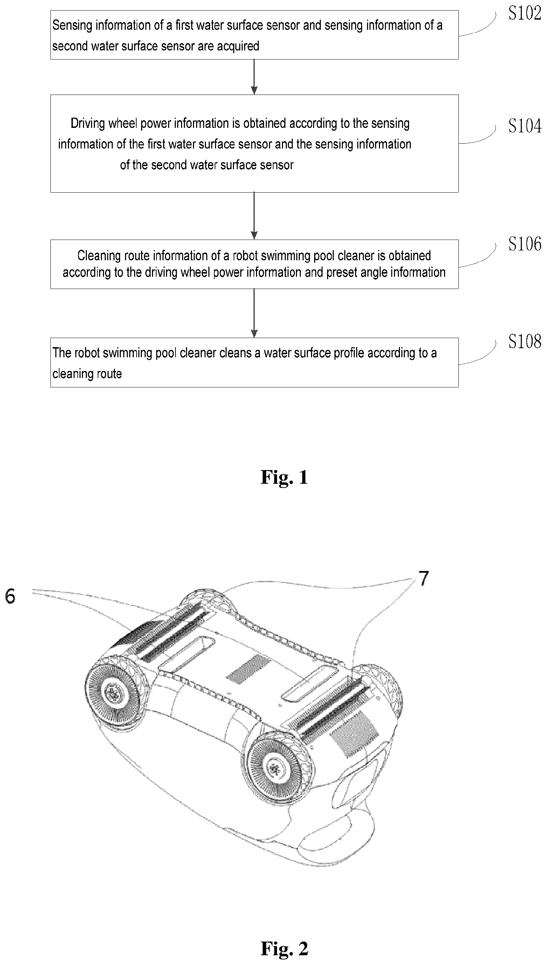

Fig. 1 is a flowchart of a water surface profile cleaning method of a robot swimming pool cleaner according to the present application.

As shown in Fig. 1, the present application discloses a water surface profile cleaning method of a robot swimming pool cleaner. The method includes the following steps.

At S102, sensing information of a first water surface sensor 1 and sensing information of a second water surface sensor 2 are acquired.

The sensing information refers to information that the water surface sensors detect whether there is liquid at positions where the water surface sensors are located.

At S104, driving wheel power information is obtained according to the sensing information of the first water surface sensor and the sensing information of the second water surface sensor.

At S106, cleaning route information of a robot swimming pool cleaner is obtained according to the driving wheel power information and preset angle information.

At S108, the robot swimming pool cleaner cleans a water surface profile according to a cleaning route.

It is to be noted that, the water surface sensors are, for example, guide-rail electrode type water-logging sensors, which perform signal amplification, shaping, and comparison on a water-logging input signal by means of an application-specific integrated chip according to the principle of changes in a water-logging resistance value of an electrode, and then output a dry contact or high-low level change signal to indicate that whether there is water at the position of a transmitter.

The water surface profile is the water surface profile, which is formed at a contact part between the water surface of a swimming pool and a wall of the swimming pool.

The driving wheel power information is the information used for controlling the state of a driving wheel, for example, for starting the driving wheel or closing the driving wheel. Specifically, the driving wheel power information includes driving wheel power starting information and driving wheel power closing information. The robot swimming pool cleaner includes two water surface sensors; the first water surface sensor is at a head portion; and when the first water surface sensor comes into contact with the water surface, a signal is triggered, so as to obtain the driving wheel power starting information, such that the robot swimming pool cleaner climbs upwards in an attitude with a preset angle. The second water surface sensor is at a tail portion; during the upward climbing of the robot swimming pool cleaner, the second water surface sensor comes into contact with the water surface to generate a triggering signal, so as to obtain the driving wheel power closing information, such that the robot swimming pool cleaner perpendicular and slowly climbs downwards under the interaction between gravity and the buoyancy of water. Routes that the robot swimming pool cleaner climbs upwards and downwards form a cleaning route of the robot swimming pool cleaner. According to the cleaning route, the water surface profile is cleaned by means of a preset cleaning system.

Fig. 2 is a schematic diagram of a cleaning principle of a robot swimming pool cleaner according to the present application.

As shown in Fig. 2, according to the embodiments of the present solution, the step of cleaning, by the robot swimming pool cleaner, the water surface profile according to the cleaning route includes the following operations.

Water-draining motor 10 starting information is sent to a preset water-draining motor 10, so as to make the robot swimming pool cleaner tightly attached to a wall.

Cleaning roller brush 7 starting information is sent to a preset control terminal, so as to start a cleaning roller brush 7 to clean the water surface profile.

Dirt suction port 6 starting information is sent to the preset control terminal, so as to start a dirt suction port 6 to store dirt that is cleaned off.

It is to be noted that, the cleaning system of a robot swimming pool cleaner includes the cleaning roller brush 7 and the dirt suction port 6. The robot swimming pool cleaner uses a double cleaning roller brush 7 at the bottom, such that an auxiliary power effect is further provided while a cleaning process is guaranteed. During the climbing of the robot swimming pool cleaner, the water-draining motor 10 starting information, the cleaning roller brush 7 starting information and the dirt suction port 6 starting information are triggered. When the water-draining motor 10 starts operating, the robot swimming pool cleaner is tightly attached to the wall for climbing by relying on the power of back-pushing water. When the cleaning roller brush 7 and the dirt suction port 6 are started to operate by means of the preset control terminal, the robot swimming pool cleaner cleans dirt at the water surface profile by means of the cleaning roller brush 7, sucks, by means of the dirt suction port 6, water in the swimming pool and the dirt cleaned off by the cleaning roller brush 7, then filters the water and discharge the same to the swimming pool, and stores the dirt.

According to the embodiments of the present application, the method further includes the following operations.

Angle information of a preset gyroscope is acquired.

Pose angle information of the robot swimming pool cleaner is obtained according to the angle information of the preset gyroscope.

Whether a pose angle of the robot swimming pool cleaner is within a preset angle range is determined; if no, angle adjustment is performed by means of a preset attitude controller 3; and if so, adjustment does not need to be performed.

It is to be noted that, the attitude controller 3 includes a control apparatus and a gyroscope. The control apparatus is connected to the gyroscope, and is also dynamically connected to driving wheels. The driving wheel power may be divided into left driving wheel power and right driving wheel power according to left and right. The left driving wheel power corresponds to the left wheel, and the right driving wheel power corresponds to the right wheel. The pose of the robot swimming pool cleaner is detected by means of the gyroscope, such that an inclined angle of the robot swimming pool cleaner relative to a vertical direction may be sensed. For example, the preset angle range is 5 degrees to 30 degrees; and when it is detected that the inclined angle of the robot swimming pool cleaner relative to the vertical direction is 31 degrees, it indicates that the inclined angle of the robot swimming pool cleaner is excessively large, such that angle adjustment is triggered. By means of controlling the left and right driving wheel power, the left and right wheels move with different speeds, such that angle adjustment may be realized, thereby controlling the robot swimming pool cleaner to move towards a specific direction.

According to the embodiments of the present application, the method further includes the following operations.

Reacting force information of a wall to robot swimming pool cleaner wheels is acquired.

Whether a reacting force of the wall to the robot swimming pool cleaner wheels is within a preset reacting force range is determined; if no, preset water-draining motor 10 power is adjusted; and if so, adjustment does not need to be performed.

It is to be noted that, by means of using a preset wheel sensor to acquire the elastic deformation ΔL of wheels, a reacting force F of the wall on the robot swimming pool cleaner wheels is obtained, with an equation being F = ΔL ∗ k, wherein k represents an elastic coefficient of the wheel. For example, when the preset reacting force range is 20N-40N, and when F < 20N, the water-draining motor 10 power is increased; when F > 40N, the water-draining motor 10 power is decreased; and when 20N ≤ F ≤ 40N, the water-draining motor 10 power does not need to be adjusted. By means of adjusting the water-draining motor 10 power, the water outlet speed of a flow channel 4 is adjusted, so as to adjust the reacting force of the wall to the robot swimming pool cleaner wheels. If the water-draining motor 10 power is larger, the water outlet speed of the flow channel 4 is faster.

According to the embodiments of the present application, the method further includes the following operations.

Height information of the water surface profile is acquired.

Whether the height of the water surface profile is greater than or equal to a preset height threshold is determined; if no, an unable-to-work prompt is triggered; and if so, a prompt is not triggered.

It is to be noted that, the height of the water surface profile is the height from the water surface of the swimming pool to the bottom of the swimming pool. The preset height threshold is based on that the first water surface sensor of the robot swimming pool cleaner is completely immersed into water. When the inclined angle of the robot swimming pool cleaner reaches a maximum, the preset height threshold reaches a minimum. If the preset height threshold is 0.8 meters, and when the height of the water surface profile is 0.6 meters, during the operation of the robot swimming pool cleaner, the first water surface sensor of the robot swimming pool cleaner cannot trigger a signal, such that an unable-to-work prompt is triggered and is displayed at the preset control terminal; and if the height of the water surface profile is greater than 0.8 meters, the robot swimming pool cleaner operates normally, such that a prompt is not triggered.

According to the embodiments of the present application, the method further includes the following operations.

Detection information of a preset water flow detector is acquired.

Information on the flow rate of sewage treated by a dirt suction port 6 per unit time is obtained according to the detection information of the preset water flow detector.

Whether the information on the flow rate of sewage treated by the dirt suction port 6 per unit time is less than a preset flow threshold is determined; if so, cleaning filter screen information is triggered; and if no, the cleaning filter screen information is not triggered.

It is to be noted that, the bottom of the robot swimming pool cleaner is provided with two dirt suction ports 6, which respectively correspond to two cleaning roller brushes 7, such that the dirt cleaned off by the cleaning roller brushes 7 can be effectively stored. The inlets of the two dirt suction ports 6 are both provided with water flow detectors; and information on the flow rate of sewage treated by the dirt suction ports 6 per unit time is obtained by means of the water flow detectors. Filter screens are provided in the dirt suction ports 6; and the dirt in the sewage is filtered by means of the filter screens, such that the dirt is stored. When the stored dirt is too much, the dirt blocks the filter screens, resulting in reduction of the flow value of the sewage at the dirt suction ports 6. For example, the preset flow threshold is Q₀; the flow value of the sewage treated by the dirt suction ports 6 per unit time is detected to be Q by means of the water flow detectors; and then when Q < Q₀, cleaning filter screen information is triggered, and is sent to the preset control terminal, so as to cause the preset control terminal to display the cleaning filter screen information.

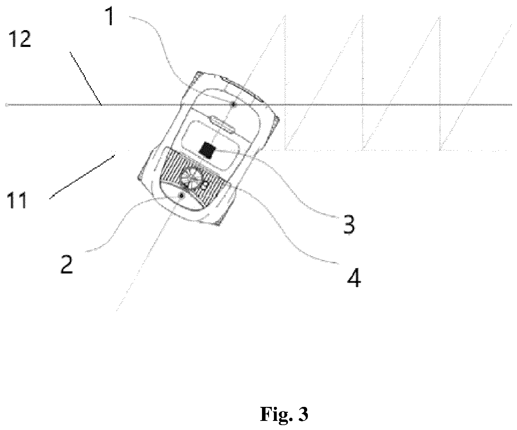

Fig. 3 is a schematic diagram of a water surface cleaning route of a robot swimming pool cleaner according to the present application.

As shown in Fig. 3, a water surface profile cleaning route of the robot swimming pool cleaner consists of an oblique upward path and a vertical downward path, and is in a zigzag shape. By means of the attitude controller 3, the robot swimming pool cleaner can move towards a specific direction.

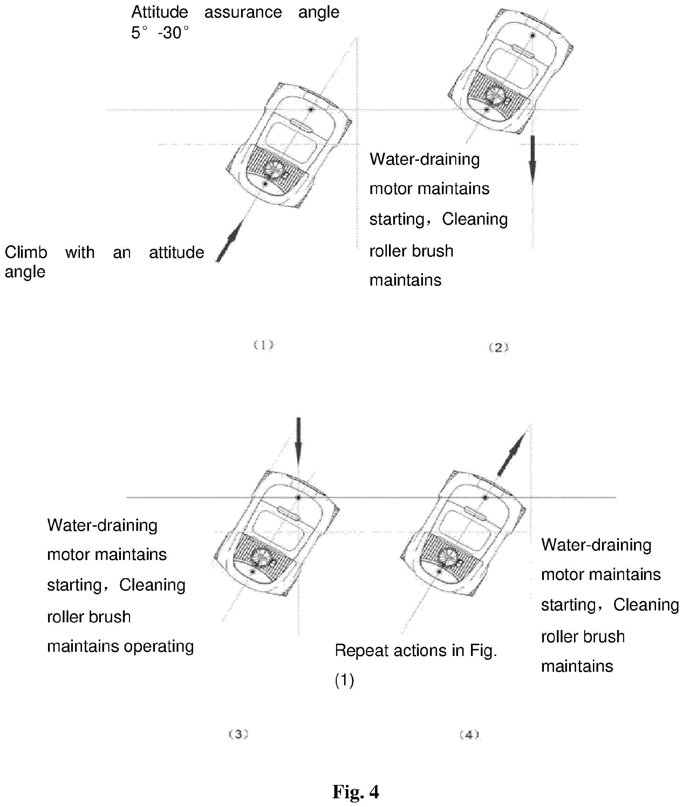

Fig. 4 is a schematic diagram of a movement mode of a robot swimming pool cleaner for water surface cleaning according to the present application.

As shown in Fig. 4, a water surface profile cleaning movement mode of the robot swimming pool cleaner is divided into 4 sections. The first section is shown in Fig. 4-1, the robot swimming pool cleaner climbs with a preset angle, for example, 5 degrees to 30 degrees; the water-draining motor 10 starts, the robot swimming pool cleaner is tightly attached to the wall by relying on the power of back-pushing water; and at the same time, the bottom cleaning roller brushes 7 start operating; and during the entire process, the dirt suction ports 6 and the cleaning roller brushes 7 continuously perform water surface profile cleaning. The second section is shown in Fig. 4-2, during an upward process of the robot swimming pool cleaner, the second water surface sensor comes into contact with the water surface to generate a triggering signal; the driving wheel power is off; the robot swimming pool cleaner abuts against the wall to perpendicularly and slowly move downward under the interaction between gravity and the buoyancy of water; and at the same time, the dirt suction ports 6 and the cleaning roller brushes 7 continuously perform water surface profile cleaning. The third section is shown in Fig. 4-3, during the perpendicularly downward moving of the robot swimming pool cleaner, the robot swimming pool cleaner perpendicularly slides down to the position of the first water surface sensor; when the first water surface sensor comes into contact with the water surface, a signal is triggered, and the driving wheel power starts, such that the robot swimming pool cleaner climbs upward again with the preset angle; and at the same time, the dirt suction ports 6 and the cleaning roller brushes 7 continuously perform water surface profile cleaning. The fourth section is shown in Fig. 4-4, the robot swimming pool cleaner repeats a working mode of the first section, and so on until the purpose of cleaning the water surface profile is achieved by means of up and down repetition, and horizontal displacement is also realized, such that a cleaning range covers the entire water surface profile of the swimming pool without leaving gaps.

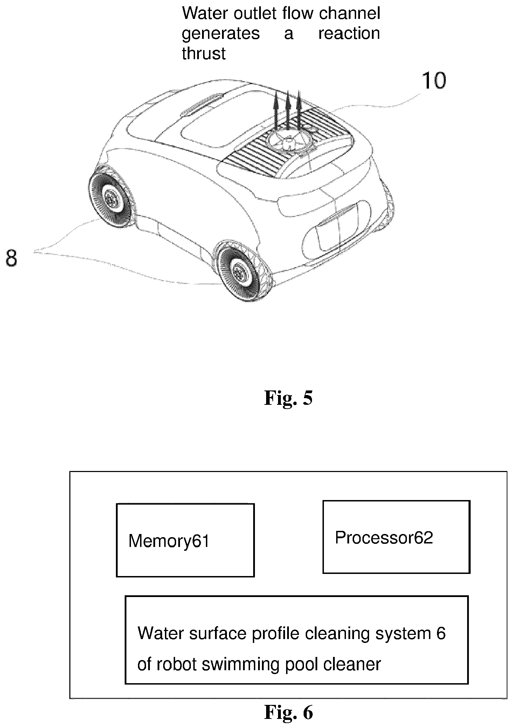

Fig. 5 is a schematic diagram of a moving-against-wall principle of a robot swimming pool cleaner according to the present application.

As shown in the figure, by means of the operation of the water-draining motor 10, the water is discharged from the flow channel 4, so as to generate a reaction thrust, such that the robot swimming pool cleaner moves by being attached to the wall.

Fig. 6 is a block diagram of a water surface profile cleaning system of a robot swimming pool cleaner according to the present application.

As shown in Fig. 6, a second aspect of the present application provides a water surface profile cleaning system 6 of a robot swimming pool cleaner. The system includes a memory 61 and a processor 62. The memory stores a water surface profile cleaning method program of a robot swimming pool cleaner; and the water surface profile cleaning method program of a robot swimming pool cleaner implements, when being executed by the processor, the following steps.

Sensing information of a first water surface sensor and sensing information of a second water surface sensor are acquired.

Driving wheel power information is obtained according to the sensing information of the first water surface sensor and the sensing information of the second water surface sensor.

Cleaning route information of a robot swimming pool cleaner is obtained according to the driving wheel power information and preset angle information.

The robot swimming pool cleaner cleans a water surface profile according to a cleaning route.

It is to be noted that, the water surface sensors are, for example, guide-rail electrode type water-logging sensors, which perform signal amplification, shaping, and comparison on a water-logging input signal by means of an application-specific integrated chip according to the principle of changes in a water-logging resistance value of an electrode, and output a dry contact or high-low level change signal to indicate that whether there is water at the position of a transmitter. The driving wheel power information includes driving wheel power starting information and driving wheel power closing information. The robot swimming pool cleaner includes two water surface sensors; the first water surface sensor is at a head portion; and when the first water surface sensor comes into contact with the water surface, a signal is triggered, so as to obtain the driving wheel power starting information, such that the robot swimming pool cleaner climbs upwards in an attitude with a preset angle. The second water surface sensor is at a tail portion; during the upward operation of the robot swimming pool cleaner, the second water surface sensor comes into contact with the water surface to generate a triggering signal, so as to obtain the driving wheel power closing information, such that the robot swimming pool cleaner perpendicular and slowly climbs downwards under the interaction between gravity and the buoyancy of water. According to the cleaning route of the robot swimming pool cleaner that is formed by routes that the robot swimming pool cleaner climbs upwards and downwards, the water surface profile is cleaned by means of a preset cleaning system.

Fig. 2 is a schematic diagram of a cleaning principle of a robot swimming pool cleaner according to the present application.

As shown in Fig. 2, according to the embodiments of the present solution, the step of cleaning, by the robot swimming pool cleaner, the water surface profile according to the cleaning route includes the following operations.

Water-draining motor 10 starting information is sent to a preset water-draining motor 10, so as to make the robot swimming pool cleaner tightly attached to a wall.

Cleaning roller brush 7 starting information is sent to a preset control terminal, so as to start a cleaning roller brush 7 to clean the water surface profile.

Dirt suction port 6 starting information is sent to the preset control terminal, so as to start a dirt suction port 6 to store dirt that is cleaned off.

It is to be noted that, the cleaning system of a robot swimming pool cleaner includes the cleaning roller brush 7 and the dirt suction port 6. The robot swimming pool cleaner uses a double cleaning roller brush 7 at the bottom, such that an auxiliary power effect is further provided while a cleaning process is guaranteed. During the climbing of the robot swimming pool cleaner, the water-draining motor 10 starting information, the cleaning roller brush 7 starting information and the dirt suction port 6 starting information are triggered. When the water-draining motor 10 starts operating, the robot swimming pool cleaner is tightly attached to the wall for climbing by relying on the power of back-pushing water. When the cleaning roller brush 7 and the dirt suction port 6 are started to operate by means of the preset control terminal, the robot swimming pool cleaner cleans dirt at the water surface profile by means of the cleaning roller brush 7, sucks, by means of the dirt suction port 6, water in the swimming pool and the dirt cleaned off by the cleaning roller brush 7, then filters the water and discharge the same to the swimming pool, and stores the dirt.

According to the embodiments of the present application, the system further includes executing the following operations.

Angle information of a preset gyroscope is acquired.

Pose angle information of the robot swimming pool cleaner is obtained according to the angle information of the preset gyroscope.

Whether a pose angle of the robot swimming pool cleaner is within a preset angle range is determined; if no, angle adjustment is performed by means of a preset attitude controller 3; and if so, adjustment does not need to be performed.

It is to be noted that, the attitude controller 3 includes a control apparatus and a gyroscope. The control apparatus is connected to the gyroscope, and is also dynamically connected to driving wheels. The driving wheel power may be divided into left driving wheel power and right driving wheel power according to left and right. The left driving wheel power corresponds to the left wheel, and the right driving wheel power corresponds to the right wheel. The pose of the robot swimming pool cleaner is detected by means of the gyroscope, such that an inclined angle of the robot swimming pool cleaner relative to a vertical direction may be sensed. For example, the preset angle range is 5 degrees to 30 degrees; and when it is detected that the inclined angle of the robot swimming pool cleaner relative to the vertical direction is 31 degrees, it indicates that the inclined angle of the robot swimming pool cleaner is excessively large, such that angle adjustment is triggered. By means of controlling the left and right driving wheel power, the left and right wheels move with different speeds, such that angle adjustment may be realized, thereby controlling the robot swimming pool cleaner to move towards a specific direction.

According to the embodiments of the present application, the system further includes executing the following operations.

Reacting force information of a wall to robot swimming pool cleaner wheels is acquired.

Whether a reacting force of the wall to the robot swimming pool cleaner wheels is within a preset reacting force range is determined; if no, preset water-draining motor 10 power is adjusted; and if so, adjustment does not need to be performed.

It is to be noted that, by means of using a preset wheel sensor to acquire the elastic deformation ΔL of wheels, a reacting force F of the wall on the robot swimming pool cleaner wheels is obtained, with an equation being F = ΔL ∗ k, wherein k represents an elastic coefficient of the wheel. For example, when the preset reacting force range is 20N-40N, and when F < 20N, the water-draining motor 10 power is increased; when F < 20N, the water-draining motor 10 power is decreased; and when 20N ≤ F ≤ 40N, the water-draining motor 10 power does not need to be adjusted. By means of adjusting the water-draining motor 10 power, the water outlet speed of a flow channel 4 is adjusted, so as to adjust the reacting force of the wall to the robot swimming pool cleaner wheels. If the water-draining motor 10 power is larger, the water outlet speed of the flow channel 4 is faster.

According to the embodiments of the present application, the system further includes executing the following operations.

Height information of the water surface profile is acquired.

Whether the height of the water surface profile is greater than or equal to a preset height threshold is determined; if no, an unable-to-work prompt is triggered; and if so, a prompt is not triggered.

It is to be noted that, the height of the water surface profile is the height from the water surface of the swimming pool to the bottom of the swimming pool. The preset height threshold is based on that the first water surface sensor of the robot swimming pool cleaner is completely immersed into water. When the inclined angle of the robot swimming pool cleaner reaches a maximum, the preset height threshold reaches a minimum. If the preset height threshold is 0.8 meters, and when the height of the water surface profile is 0.6 meters, during the operation of the robot swimming pool cleaner, the first water surface sensor of the robot swimming pool cleaner cannot trigger a signal, such that an unable-to-work prompt is triggered and is displayed at the preset control terminal; and if the height of the water surface profile is greater than 0.8 meters, the robot swimming pool cleaner operates normally, such that a prompt is not triggered.

According to the embodiments of the present application, the system further includes executing the following operations.

Detection information of a preset water flow detector is acquired.

Information on the flow rate of sewage treated by a dirt suction port 6 per unit time is obtained according to the detection information of the preset water flow detector.

Whether the information on the flow rate of sewage treated by the dirt suction port 6 per unit time is less than a preset flow threshold is determined; if so, cleaning filter screen information is triggered; and if no, the cleaning filter screen information is not triggered.

It is to be noted that, the bottom of the robot swimming pool cleaner is provided with two dirt suction ports 6, which respectively correspond to two cleaning roller brushes 7, such that the dirt cleaned off by the cleaning roller brushes 7 can be effectively stored. The inlets of the two dirt suction ports 6 are both provided with water flow detectors; and information on the flow rate of sewage treated by the dirt suction ports 6 per unit time is obtained by means of the water flow detectors. Filter screens are provided in the dirt suction ports 6; and the dirt in the sewage is filtered by means of the filter screens, such that the dirt is stored. When the stored dirt is too much, the dirt blocks the filter screens, resulting in reduction of the flow value of the sewage at the dirt suction ports 6. For example, the preset flow threshold is Q_{0;} the flow value of the sewage treated by the dirt suction ports 6 per unit time is detected to be Q by means of the water flow detectors; and then when Q < Q₀, cleaning filter screen information is triggered, and is sent to the preset control terminal, so as to cause the preset control terminal to display the cleaning filter screen information.

A third aspect of the present application provides a computer-readable storage medium. The computer-readable storage medium has a water surface profile cleaning method program of a robot swimming pool cleaner stored thereon. The water surface profile cleaning method program of a robot swimming pool cleaner implements, when being executed by a processor, steps of the water surface profile cleaning method of a robot swimming pool cleaner as described in any one of the above.

According to the water surface profile cleaning method and system of a robot swimming pool cleaner, and the readable storage medium, the method includes: acquiring the sensing information of the first water surface sensor and the sensing information of the second water surface sensor; obtaining the driving wheel power information according to the sensing information of the first water surface sensor and the sensing information of the second water surface sensor; obtaining the cleaning route information of the robot swimming pool cleaner according to the driving wheel power information and the preset angle information; and cleaning, by the robot swimming pool cleaner, the water surface profile according to the cleaning route. In the present application, a moving track problem and an automatic cleaning problem of a robot swimming pool cleaner at a water surface profile can be systematically solved, such that the water surface profile of a swimming pool can be cleaned completely without leaving a dead corner.

In several embodiments provided by the present application, it is to be understood that the disclosed device and method may be implemented in other ways. The device embodiment described above is only schematic, and for example, division of the units is only logic function division, and other division manners may be adopted during practical implementation. For example, a plurality of units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part of all of the units may be selected according to a practical requirement to achieve the purposes of the solutions of the embodiments.

In addition, each functional unit in each embodiment of the present application may be integrated into a processing unit, each unit may also serve as an independent unit and two or more than two units may also be integrated into a unit. The integrated unit may be implemented in a hardware form and may also be implemented in form of hardware and software functional unit.

Those of ordinary skill in the art should know that all or part of the steps of the method embodiment may be implemented by related hardware instructed through a program, the program may be stored in a computer-readable storage medium, and the program is executed to execute the steps of the method embodiment. The storage medium which may be a volatile storage medium includes: a mobile storage device, a Read-Only Memory (ROM), a Random Access Memory (RAM) and various media that can store program codes, such as a magnetic disk, or an optical disk.

Alternatively, if the integrated unit of the present application is implemented in the form of the software functional unit and sold or used as an independent product, it can be stored in the computer-readable storage medium. Based on such an understanding, the technical solutions of the embodiments of the present application substantially or parts making contributions to the related art may be embodied in form of a software product, and the computer software product is stored in a storage medium, including a plurality of instructions for causing a computer device (which may be a personal computer, a server, a network device or the like) to execute all or part of the method in each embodiment of the present application. The foregoing storage medium includes a portable storage device, an ROM, an RAM, and various media that can store program codes, such as a magnetic disk, or an optical disk.

## Claims

1. A water surface profile cleaning method of a robot swimming pool cleaner, comprising:
acquiring sensing information of a first water surface sensor and sensing information of a second water surface sensor;
obtaining driving wheel power information according to the sensing information of the first water surface sensor and the sensing information of the second water surface sensor;
obtaining cleaning route information of a robot swimming pool cleaner according to the driving wheel power information and preset angle information; and
cleaning, by the robot swimming pool cleaner, a water surface profile according to a cleaning route.

2. The water surface profile cleaning method of a robot swimming pool cleaner as claimed in claim 1, wherein the cleaning, by the robot swimming pool cleaner, a water surface profile according to a cleaning route comprises:
sending water-draining motor starting information to a preset water-draining motor, so as to make the robot swimming pool cleaner tightly attached to a wall;
sending cleaning roller brush starting information to a preset control terminal, so as to start a cleaning roller brush to clean the water surface profile; and
sending dirt suction port starting information to the preset control terminal, so as to start a dirt suction port to store dirt that is cleaned off.

3. The water surface profile cleaning method of a robot swimming pool cleaner as claimed in claim 1, further comprising:
acquiring angle information of a preset gyroscope;
obtaining pose angle information of the robot swimming pool cleaner according to the angle information of the preset gyroscope; and
determining whether a pose angle of the robot swimming pool cleaner is within a preset angle range, if no, performing angle adjustment by means of a preset attitude controller, and if so, not performing adjustment.

4. The water surface profile cleaning method of a robot swimming pool cleaner as claimed in claim 1, further comprising:
acquiring reacting force information of a wall to robot swimming pool cleaner wheels; and
determining whether a reacting force of the wall to the robot swimming pool cleaner wheels is within a preset reacting force range, if no, adjusting preset water-draining motor power, and if so, not performing adjustment.

5. The water surface profile cleaning method of a robot swimming pool cleaner as claimed in claim 1, further comprising:
acquiring height information of the water surface profile; and
determining whether the height of the water surface profile is greater than or equal to a preset height threshold, if no, triggering an unable-to-work prompt, and if so, not triggering a prompt.

6. The water surface profile cleaning method of a robot swimming pool cleaner as claimed in claim 1, further comprising:
acquiring detection information of a preset water flow detector;
obtaining, according to the detection information of the preset water flow detector, information on the flow rate of sewage treated by a dirt suction port per unit time; and
determining whether the information on the flow rate of sewage treated by the dirt suction port per unit time is less than a preset flow threshold, if so, triggering cleaning filter screen information, and if no, not triggering the cleaning filter screen information.

7. A water surface profile cleaning system of a robot swimming pool cleaner, comprising a memory and a processor, wherein the memory stores a water surface profile cleaning method program of a robot swimming pool cleaner; and the water surface profile cleaning method program of a robot swimming pool cleaner implements, when being executed by the processor, the following steps:
acquiring sensing information of a first water surface sensor and sensing information of a second water surface sensor;
obtaining driving wheel power information according to the sensing information of the first water surface sensor and the sensing information of the second water surface sensor;
obtaining cleaning route information of a robot swimming pool cleaner according to the driving wheel power information and preset angle information; and
cleaning, by the robot swimming pool cleaner, a water surface profile according to a cleaning route.

8. The water surface profile cleaning system of a robot swimming pool cleaner as claimed in claim 7, wherein the cleaning, by the robot swimming pool cleaner, a water surface profile according to a cleaning route comprises:
sending water-draining motor starting information to a preset water-draining motor, so as to make the robot swimming pool cleaner tightly attached to a wall;
sending cleaning roller brush starting information to a preset control terminal, so as to start a cleaning roller brush to clean the water surface profile; and
sending dirt suction port starting information to the preset control terminal, so as to start a dirt suction port to store dirt that is cleaned off.

9. The water surface profile cleaning system of a robot swimming pool cleaner as claimed in claim 7, further comprising:
acquiring angle information of a preset gyroscope;
obtaining pose angle information of the robot swimming pool cleaner according to the angle information of the preset gyroscope; and
determining whether a pose angle of the robot swimming pool cleaner is within a preset angle range, if no, performing angle adjustment by means of a preset attitude controller, and if so, not performing adjustment.

10. A computer-readable storage medium, having a water surface profile cleaning method program of a robot swimming pool cleaner stored thereon, wherein the water surface profile cleaning method program of a robot swimming pool cleaner implements, when being executed by a processor, steps of the water surface profile cleaning method of a robot swimming pool cleaner as claimed in any of claims 1 to 6.
